# EUROPEAN PATENT APPLICATION

(11) **EP 3 586 700 A1**
(43) Date of publication of application: **01.01.2020**
(21) Application number: 18179433.0
(22) Date of filing: 25.06.2018
(51) Int. Cl.: A47J 43/046, A23N 1/00, A47J 43/07, A47J 19/02

(54) **A JUICER AND A JUICING METHOD**

(71) Applicant: Koninklijke Philips N.V., 5656 AE Eindhoven (NL)
(72) Inventor: KRALL, Florian, 5656 AE Eindhoven (NL)
(74) Representative: de Haan, Poul Erik

(57) **Abstract**

A juicer combines a tool such as a rotary cutter (18) and a rotary sieve (22). After processing with the tool (e.g. blending) the food to be juiced is passed to the rotary sieve (22). When the sieve (22) rotates, juice is provided, and when the sieve (22) stops, pulp is provided. In this way, the consistency of the outlet (34), namely the ratio of pulp and juice, may be controlled.

## Description

### FIELD OF THE INVENTION

This invention relates to juicers.

### BACKGROUND OF THE INVENTION

Healthy fruit (and/or vegetable) drinks are increasingly popular, and many different types of kitchen appliance are available for blending and/or juicing to create these drinks.

Different ingredients will give rise to different consistencies. The consistencies may be categorized as mousse, thick smoothie, thin smoothie, fibrous juice and clear juice.

Juicers, and more generally food processors, blenders, masticators, smoothie makers and other kitchen devices, produce beverages with one or two of these categories of consistency depending on the fruit or vegetable.

For example, blenders and smoothie makers generally produce mousse or thick smoothies because they keep all fibers in the beverage. By adding additional fluids like water or milk, the consistency can be changed to a thin smoothie or even a fibrous juice for some fruits. A disadvantage of this process is that the beverage is often tasteless because of the dilution.

Masticators and centrifugal juicers generally produce mainly clear and fibrous juice consistencies by separating solid and liquid contents of the fruit or vegetables by the use of sieves and meshes. The consistency is strongly dependent on the fruit and device type. Some devices are also capable of producing smoothies as a second device setting.

The consistency of the beverage mainly depends on the amount of solids (fibers) in the specific fruit or vegetable e.g. cellulose and on the processing principle.

Most existing products offer one or at most two consistency settings (e.g. clear juice and fibrous juice). Most existing kitchen devices are also limited to some fruit and vegetable types which match the device process.

One known way to provide a more selectable consistency is to use a so-called peeling tube, which is inserted into a centrifuge drum to a controllable depth. Juice of selectable thickness is then delivered by the kinetic energy of the centrifuge rotation. However, this is difficult to control and results in a complex appliance.

It would be desirable to be able to produce fresh juice from fruits and vegetables with the option to freely choose the consistency of the beverage for every fruit or vegetable, according to personal taste preferences or health needs (for example a need for dietary fibers). There is a need for this flexibility in an appliance which is simple to manufacture and simple to use.

### SUMMARY OF THE INVENTION

The invention is defined by the claims.

Examples in accordance with the invention provide a juicer for extracting juice from food ingredients comprising:
a cavity for receiving the food ingredients having an outlet which is adapted to be opened and closed;
a tool in the cavity for releasing juice from the food ingredients;
a rotary sieve for receiving food ingredients from the cavity, the rotary sieve having an outer sieve wall;
a drive system for driving the tool to release juice from the food ingredients in the cavity and for rotating the rotary sieve so as to pass juice through the outer sieve wall, wherein the drive system enables independent control of the tool and the rotating of the sieve;
a system for controlling the opening and closing of the cavity; and
a juice outlet for providing the extracted juice comprising juice which has passed through the outer sieve wall and pulp which has not passed through the outer sieve wall.

This juicer is able to provide a controllable juice characteristic, by delivering a mixture of juice which was able to pass through the sieve and pulp which was not delivered to the outer sieve wall. The sieving is based on a centrifugal process by which juice is forced through the rotating sieve by centrifugal forces. The nature of the juice may for example be controllable simply based on a time sequence of the operation of the juicer. The juicer may be controlled to provide clear juice, cloudy juice, a thin smoothie or a thick smoothie. These time sequences may be preset for different food types (fruits, vegetables) and different desired juice consistencies. The time sequences define the starting of sieve rotation and the stopping of sieve rotation. A rotating sieve delivers juice through the sieve whereas a stopped sieve delivers juice/pulp directly to the juice outlet.

The juicer may further comprise a combining system for combining juice which has passed through the outer sieve wall and pulp which has not passed the outer sieve wall, wherein the combined juice is provided to the juice outlet.

The combining system may simply combine two flow paths to the outlet - the outlet may deliver the two types of fluid time-sequentially, so that mixing may take place in the eventual receptacle to which the juice is delivered.

The combining system is for example adapted to combine pulp received by gravity, and juice received by centrifugal operation of the rotary sieve. This provides a simple way to deliver a mixture of juice and pulp to the outlet.

The rotary sieve may comprise a ramp surface beneath the cavity outlet, with a pulp outlet at the bottom of the ramp surface and the outer sieve wall at the top of the ramp surface.

The food ingredients (which are the pre-sieved but cut food ingredients) rise up the ramp surface by centrifugal operation when the rotary sieve is rotating and drop down the ramp surface when the rotary sieve is stationary. The juice outlet may thus be adapted to receive pulp when the sieve rotation is stopped and to receive juice when the sieve is rotating. The drive system is for example adapted to control the timing of the rotating of the sieve to control the consistency of the juice outlet. Thus, juice and pulp can be mixed with minimal additional hardware complexity.

The drive system is for example adapted to provide pulsed timing of the rotating of the sieve with a controllable duty cycle. The duty cycle controls the times of juice collection and pulp collection. This provides a simply way to control the juice characteristics.

The tool for example comprises a rotary cutter such as a blender tool. This is used to perform an initial breaking up of a foodstuff (typically fruit or vegetable) before juice extraction by the sieve. The blender tool is for cutting and/or grinding and/or shredding the food ingredients thereby to release juice from the food ingredients. A rotary tool is preferred, for shredding, grinding or cutting, although other options are possible.

The drive system is for example adapted to rotate the rotary sieve in one direction and the tool in an opposite direction. The drive system for example comprises a motor with a free wheeling clutch.

The tool may be controllable with a first speed or range of speeds, and the rotary sieve is controllable with a different second speed or range of speeds. Different speeds are appropriate for cutting (blending) and for centrifugal sieving.

The rotary cutter and the rotary sieve are for example adapted to rotate about an upright axis in use. This provides a compact arrangement, in which food ingredients may be loaded into the juicer from above. The sieve operation displaces the food ingredients radially outwardly.

The invention also provides a method for extracting juice from food ingredients, comprising:
placing food ingredients in a cavity which has an outlet;
operating a tool in the cavity to release juice from the food ingredients with the outlet closed;
opening the cavity to allow the food ingredients to flow to a rotary sieve;
rotating the rotary sieve so as to pass juice through an outer sieve wall; and
combining juice which has passed through the outer sieve wall and pulp which has not passed to the outer sieve wall, and providing the combination as the juice outlet.

This method combines pulp which has not passed through a sieve and juice which has passed through the sieve so that a juice consistency may be selected.

The method may comprise combining pulp received by gravity and juice received by centrifugal operation of the rotary sieve.

The method may comprise stopping the rotary sieve to deliver pulp and rotating the rotary sieve to deliver juice. There may for example be pulsed timing of the rotating of the sieve with a controllable duty cycle.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows an example of a juicer;
Fig. 2 shows a first flow path for the juicer of Fig. 1, in use; and
Fig. 3 shows a second flow path for the juicer of Fig. 1, in use.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a juicer which combines a tool such as a rotary cutter and a rotary sieve. After processing with the tool (e.g. blending) the food to be juiced is passed to the rotary sieve. When the sieve rotates, juice is provided, and when the sieve stops, pulp is provided. In this way, the consistency of the outlet, namely the ratio of pulp and juice, may be controlled.

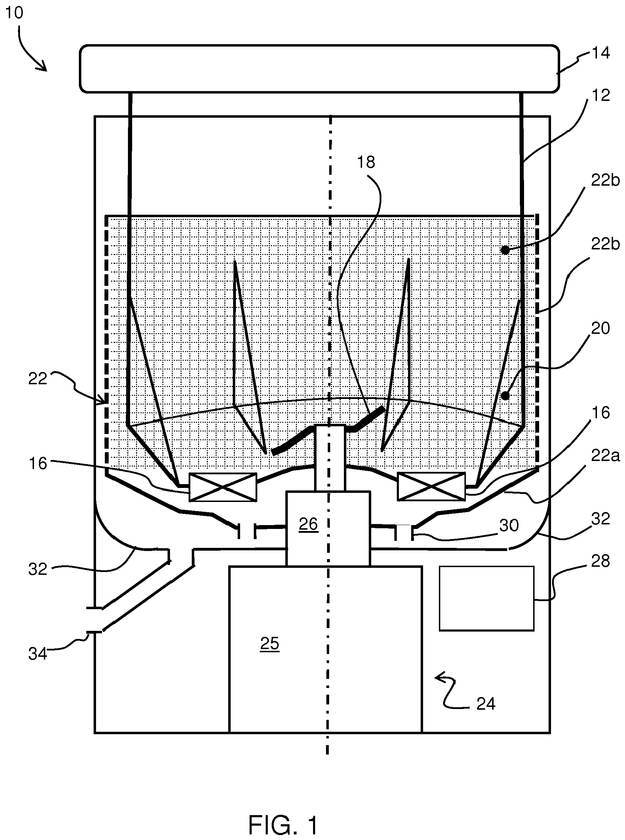

Fig. 1 shows a juicer 10 for extracting juice from food ingredients. It shows a side view in cross section but also showing some details behind the cross section.

The juicer comprises a cavity 12 for receiving the food ingredients from an open top, which is then closed by a lid 14. The cavity has an outlet which can be opened and closed. Two valves 16 are shown for this purpose. There may be a single outlet and associated valve, or two or more outlets and associated valves.

The outlets and valves define the lowest point of the cavity so that food ingredients (once they are in liquid form) flow to the outlet or outlets under gravity.

A rotary cutter 18 is in the cavity for cutting the food ingredients and thereby releasing juice. The rotary cutter is for example a blender tool, although any cutting tool for cutting, shredding or crushing may be used. By way of example, the processing may result in a particle size of below 250µm, for example with at least 90% of particles with a size of 250 µm or less.

The cavity 12 has a set of ribs 20 around its inner wall. These function as flow breakers. They cause a recirculation of the food pieces, fluid and pulp during the blending process. As a result a smoother blend is achieved.

A rotary sieve 22 is positioned for receiving food ingredients from the cavity 12 from the outlet or outlets. The rotary sieve has a base part 22a which is liquid impermeable and an outer sieve wall 22b. The outer sieve wall comprises an array of openings though which juice is able to pass when a centrifugal force is applied by rotation of the sieve.

A drive system 24 is provided for rotating the rotary cutter 18 to cut the food ingredients in the cavity and for rotating the rotary sieve 22 so as to pass juice through the outer sieve wall 22b.

The rotary cutter and the rotary sieve rotate about an upright axis in use in the example shown. This provides a compact arrangement, in which food ingredients may be loaded into the juicer from above with the lid removed.

The drive system 24 comprises a motor 25 and a freewheeling clutch 26. Operation of the motor enables independent control of the rotating of the rotary cutter 18 and the rotating of the sieve 22. The drive system for example rotates the rotary sieve in one direction and the rotary cutter in an opposite direction. When one device is being rotated, the other is in a freewheel state by means of the clutch, and slows.

The rotary cutter may be controllable with a first speed or range of speeds, and the rotary sieve is controllable with a different second speed or range of speeds. Different speeds are appropriate for cutting (blending) and for centrifugal sieving.

The rotary cutter for example operates between 10000 and 25000 rpm under load. The centrifugal sieve operation for example operates generally between 500 and 5000 rpm, for example with a maximum in the range 6000 to 7000rpm. Higher rpm values may not be desired for safety reasons, whereas lower rpm values may give excessively long processing times.

A controller 28 is used to control the opening and closing of the cavity by controlling the valves 16 as well as controlling the motor.

The outer sieve wall 22b functions as a juice outlet. The sieve 22 also has an outlet 30 or set of outlets in the base part 22a which functions as a pulp outlet. When the blended liquid from the cavity is released by the outlet valve 16, it can either flow further down to the outlet 30 under gravity or it can be driven centrifugally outwardly and up to the outer sieve wall 22b.

The base part 22a comprises a ramp surface beneath the cavity outlet, with the pulp outlet 30 at the bottom of the ramp surface at a radially inner location and the outer sieve wall 22b at the top of the ramp surface at a radially outer location. The food ingredients (which are the pre-sieved but cut food ingredients) rise up the ramp surface by centrifugal forces when the rotary sieve is rotating and drop down the ramp surface when the rotary sieve is stationary.

Thus, if the sieve is rotating, received blended liquid from the cavity will be subjected to a sieving operation and clear juice will be provided from the outer sieve wall 22b. If the sieve is not rotating, received blended liquid from the cavity will flow under gravity to the outlet 30 and pulp will be provided from the sieve base part 22a.

The rotation speed of the sieve is such that the pulp which cannot pass through the outer sieve wall 22b (or the majority of it) remains compressed against the outer sieve wall, and does not fall back down to the outlet 30 when the sieve rotation is halted.

A collection tray 32 collects the liquid from the outer sieve wall 22b and from the outlet 30 of the sieve base part 22a. The liquid from the outer sieve wall is relatively clear whereas the liquid from the outlet 30 is relatively cloudy. The collection tray leads to a juice outlet 34 for providing the extracted juice.

The collection tray may thus be considered to be a combining system which combines the juice which has passed through the outer sieve wall 22b and pulp which was not passed through the outer sieve wall. The collection tray basically combines the two flow paths to the juice outlet 34. The flow to the juice outlet 34 may comprise the two juice types in a time sequence (since one type is delivered during sieve rotation and the other type is delivered when the sieve is stationary). Final mixing then takes place in the eventual receptacle to which the juice is delivered.

As an alternative, there may be two juice outlets side by side, one from the outer sieve wall 22b of the rotary sieve and one from the outlet 30. Thus, the mixing may then only take place in the vessel to which the two types of juice are provided from the respective outlets.

As explained above, the juice outlet 34 thus receives a mixture of juice which was able to pass through the sieve when the sieve was rotating and liquid including juice and pulp which was not delivered to the sieve wall. The sieving is based on a centrifugal process by which juice is forced through the rotating sieve by centrifugal forces.

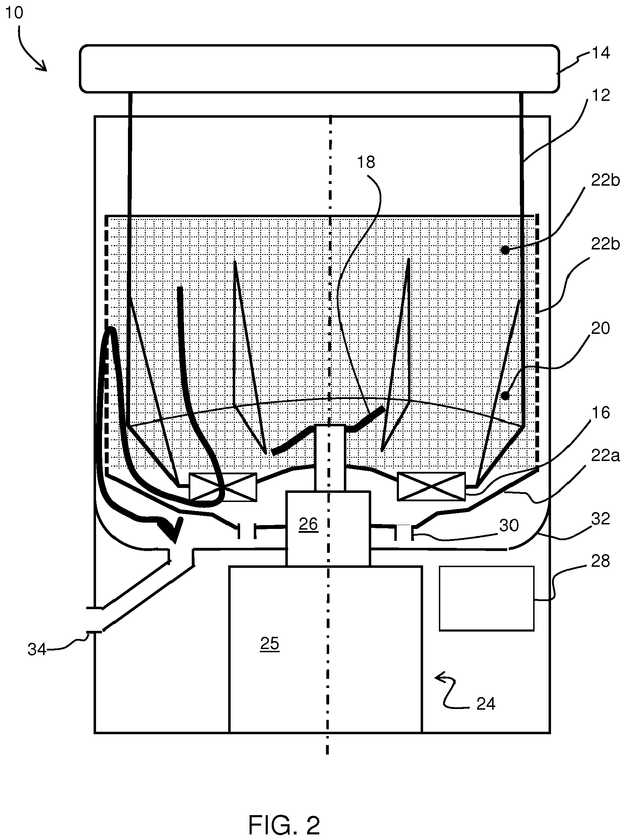

Fig. 2 shows the flow path for blended liquid during sieve rotation. The liquid passes the valve 16, reaches the base wall 22a of the sieve, and is flung radially outwardly, away from the outlet 30 and towards the sieve outer wall 22b. The sieving operation provides relatively clear juice to the collection tray and then the juice outlet.

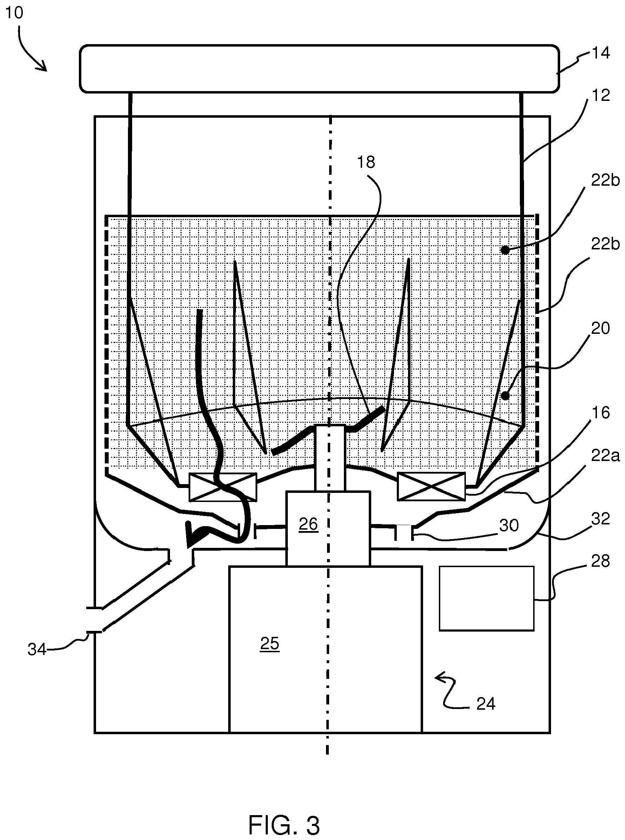

Fig. 3 shows the flow path for blended liquid when the sieve is static. The liquid passes the valve 16, reaches the base wall 22a of the sieve, flows down to the outlet 30 under gravity and then passes to the collection tray and then the juice outlet.

The two flows of Figs. 2 and 3 are thus combined, i.e. mixed, either in the collection tray or in the eventual receptacle.

The nature of the juice provided to the outlet 34 may therefore be controlled simply based on a time sequence of the operation of the juicer as implemented by the controller 28.

The controller for example receives an indication of the type of fruit or vegetable to be juiced, a quantity, and the desired juice consistency of the user, such as clear juice, cloudy juice, a thin smoothie or a thick smoothie.

The controller then selects a time sequence. The time sequence defines the duration of the initial blending process, with the valves 16 closed, the timing of the opening of the valves 16, and the starting and stopping of sieve rotation after the valves have been opened. The rotating sieve delivers juice through the sieve whereas the stopped sieve delivers juice/pulp directly to the juice outlet.

The sieve operation may comprise only a single period of rotation and a static period. However, a pulses operation may instead be used with a duty cycle which determines the ratio of sieve operation to sieve non-operation. This provides a simple way to control the juice characteristics.

The control of the valves 16 may also be synchronized with the sieve rotation. For example, a small amount of the blended liquid may be released to the sieve from the cavity at a time. That small amount is then processed by the sieve either as a single period of rotation and a static period (in either order) or as a pulsed rotation with controlled duty cycle. Alternatively, the valves maybe opened only once, to allow all the blended contents of the cavity to pass to the sieve (which is rotating, or stationary, or pulsed between the two).

A clear juice may for example be obtained by rotating the sieve 100% of the time after the valves are open.

A mousse may for example be obtained by not rotating the sieve at all, thus simply providing a blended output.

A light smoothie may for example be obtained by rotating the sieve 80% to 90% of the time after the valves are open and the contents of the cavity flows to the sieve.

A thick smoothie may for example be obtained by rotating the sieve 50% to 80% of the time after the valves are open and the contents of the cavity flows to the sieve.

The valves have an opening size such that pulp can easily pass through. The flow rate from the cavity into the sieve is for example in the range 3 to 5 liters per minute.

By way of example, the blending time may typically be from 15 seconds to 1 minute and the filtering time may typically be from 15 seconds to 30 seconds.

The invention may be applied to small kitchen appliances, for example for one glass of juice with a drum capacity of approximately 0.5 liters as well as to large devices for entire families with a drum capacity up to 5 liters.

By way of example, the cavity diameter may be of the order of 100mm and the cavity height may be of the order of 50mm. The dimensions of course depend on the desired volume capacity of the cavity.

Only one example of juicer design has been provided above. However, the concept of the invention may be applied to other designs. A controlled combination of sieved and pre-sieved food ingredient is delivered by the juicer so that a cloudiness or thickness of the juice may be selected by the user.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A juicer for extracting juice from food ingredients comprising:
a cavity (12) for receiving the food ingredients having an outlet which is adapted to be opened and closed;
a tool (18) in the cavity for releasing juice from the food ingredients;
a rotary sieve (22) for receiving food ingredients from the cavity, the rotary sieve having an outer sieve wall (22b);
a drive system (24) for driving the tool to release juice from the food ingredients in the cavity and for rotating the rotary sieve so as to pass juice through the outer sieve wall, wherein the drive system (24) enables independent control of the tool and the rotating of the sieve;
a system (28) for controlling the opening and closing of the cavity; and
a juice outlet (34) for providing the extracted juice comprising juice which has passed through the outer sieve wall and pulp which has not passed through the outer sieve wall.

2. A juicer as claimed in claim 1, further comprising a combining system (32) for combining juice which has passed through the outer sieve wall (22b) and pulp which has not passed the outer sieve wall, wherein the combined juice is provided to the juice outlet (34).

3. A juicer as claimed in claim 2, wherein the combining system (32) is adapted to combine pulp received by gravity, and juice received by centrifugal operation of the rotary sieve (22).

4. A juicer as claimed in claim 3, wherein the rotary sieve comprises a ramp surface beneath the cavity outlet (16), with a pulp outlet at the bottom of the ramp surface and the outer sieve wall at the top of the ramp surface.

5. A juicer as claimed in any one of claims 1 to 4, wherein the juice outlet (34) is adapted to receive pulp when the sieve rotation is stopped and to receive juice when the sieve is rotating.

6. A juicer as claimed in any one of claims 1 to 5, wherein the drive system (24) is adapted to control the timing of the rotating of the sieve (22) to control the consistency of the juice outlet.

7. A juicer as claimed in claim 6, wherein the drive system (24) is adapted to provide pulsed timing of the rotating of the sieve with a controllable duty cycle.

8. A juicer as claimed in any one of claims 1 to 7, wherein the tool comprises a rotary cutter (18) such as a blender tool.

9. A juicer as claimed in claim 8, wherein the drive system (24) is adapted to rotate the rotary sieve (22) in one direction and the tool (18) in an opposite direction.

10. A juicer as claimed in claim 8 or 9, wherein the tool (18) is controllable with a first speed or range of speeds, and the rotary sieve (22) is controllable with a different second speed or range of speeds.

11. A juicer as claimed in any one of claims 8 to 10, wherein the tool (18) and the rotary sieve (22) are adapted to rotate about an upright axis in use.

12. A method for extracting juice from food ingredients, comprising:
placing food ingredients in a cavity (12) which has an outlet (16);
operating a tool (18) in the cavity to release juice from the food ingredients with the outlet closed;
opening the cavity to allow the food ingredients to flow to a rotary sieve (22);
rotating the rotary sieve (22) so as to pass juice through an outer sieve wall (22b); and
combining juice which has passed through the outer sieve wall (22b) and pulp which has not passed to the outer sieve wall (22b), and providing the combination as the juice outlet.

13. A method as claimed in claim 12, comprising combining pulp received by gravity and juice received by centrifugal operation of the rotary sieve.

14. A method as claimed in claim 12 or 13, comprising stopping the rotary sieve to deliver pulp and rotating the rotary sieve to deliver juice.

15. A method as claimed in claim 14, comprising providing pulsed timing of the rotating of the sieve with a controllable duty cycle.
